# EUROPEAN PATENT APPLICATION

(11) **EP 4 801 093 A1**
(43) Date of publication of application: **02.09.2026**
(21) Application number: 24884261.9
(22) Date of filing: 11.09.2024
(51) Int. Cl.: H04W 24/02

(54) **DATA PROCESSING METHOD AND APPARATUS, DEVICE, AND READABLE STORAGE MEDIUM**

(30) Priority: 31.10.2023 CN 202311433717
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LI, Aihua, Beijing 100032 (CN); CHEN, Chao, Beijing 100032 (CN); WEI, Bin, Beijing 100032 (CN)
(74) Representative: Novagraaf Technologies
(86) International application number: PCT/CN2024/118173
(87) International publication number: WO 2025/092254

(57) **Abstract**

The present disclosure relates to the technical field of communications, and provides a data processing method and apparatus, a device, and a readable storage medium, used for reducing performance consumption of air interface resources and networks. The method comprises: receiving first information sent by a second network element; and sending or stopping sending network auxiliary data on the basis of the first information, or sending or stopping sending the network auxiliary data to a wireless network or a base station by calling a service of the second network element.

## Description

### CROSS-REFERENCE TO RELATED APPLICATION

This application claims priority to Chinese patent application No. 202311433717.0 filed on October 31, 2023, the content of which is incorporated herein by reference in its entirety.

### TECHNICAL FIELD

The disclosure relates to the technical field of communications, and in particular to a method and apparatus for data processing, a device and a readable storage medium.

### BACKGROUND

In a 5^{th}-generation Core Network (5GC) calibration data distribution scheme in the related art, a Location Management Function (LMF) acquires network assistance data from a data center of a base station, and broadcasts same to terminals through an Access and Mobility Management Function (AMF) and a Radio Access Network (RAN).

However, consumption of air interface resources and network performance would be caused.

### SUMMARY

Embodiments of the disclosure provide a method and apparatus for data processing, a device, a device and a readable storage medium, to reduce the consumption of air interface resources and network performance.

In a first aspect, embodiments of the disclosure provide a method for data processing, applied to a first network element and including: receiving first information from a second network element; and transmitting or stopping transmitting network assistance data according to the first information, or transmitting or stopping transmitting the network assistance data to a radio network or a base station by invoking a service of the second network element.

Optionally, receiving the first information from the second network element includes: transmitting a subscription message to the second network element, wherein the subscription message includes at least one of a high-precision positioning identifier or position information of first network assistance data; and receiving the first information from the second network element.

Optionally, if the subscription message does not include a first threshold, the first information includes a first indication, wherein the first indication indicates a number of high-precision positioning subscribed terminals located within a range determined according to the position information of the first network assistance data; and the first threshold is configured by the first network element; or
if the subscription message includes the first threshold, the first information includes a second indication, wherein the second indication indicates whether the number of high-precision positioning subscribed terminals located within the range determined according to the position information of the first network assistance data is greater than or equal to the first threshold; and the first threshold is configured by the first network element; or
the first information includes a third indication, wherein the third indication indicates to transmit or stop transmitting the network assistance data, and the third indication is determined by the second network element based on whether the number of high-precision positioning subscribed terminals located within the range determined according to the position information of the first network assistance data is greater than or equal to the first threshold; and the first threshold is configured by the second network element.

Optionally, transmitting, by the network element, the network assistance data according to the first information includes: transmitting the network assistance data, if the first information indicates that at least one high-precision positioning subscribed terminal is located within the range determined according to the position information of the first network assistance data, or the first information indicates that the number of high-precision positioning subscribed terminals located within the range determined according to the position information of the first network assistance data is greater than or equal to the first threshold, or the first information indicates to transmit the network assistance data.

Optionally, stopping transmitting, by the first network element, the network assistance data according to the first information includes: stopping transmitting the network assistance data, if the first information indicates that no high-precision positioning subscribed terminal is located within the range determined according to the position information of the first network assistance data, or the first information indicates that the number of high-precision positioning subscribed terminals located within the range determined according to the position information of the first network assistance data is less than the first threshold, or the first information indicates to stop transmitting the network assistance data.

Optionally, receiving the first information from the second network element includes: mapping, according to acquired position information of the first network assistance data, the position information of the first network assistance data into one or more tracking area (TA) lists; transmitting a subscription message for each of one or more TA lists, wherein the subscription message includes a high-precision positioning identifier, and TA list information; and receiving the first information from the second network element.

Optionally, if the subscription message does not include a second threshold, the first information includes a fourth indication, wherein the fourth indication indicates a number of high-precision positioning subscribed terminals located within a range determined according to the TA list information; and the second threshold is configured by the first network element; or
if the subscription message includes the second threshold, the first information includes a fifth indication, wherein the fifth indication indicates whether the number of high-precision positioning subscribed terminals located within the range determined according to the TA list information is greater than or equal to the second threshold; and the second threshold is configured by the first network element; or
the first information includes a sixth indication, wherein the sixth indication indicates to transmit or stop transmitting the network assistance data, and the sixth indication is determined by the second network element based on whether the number of high-precision positioning subscribed terminals located within the range determined according to the TA list information is greater than or equal to the second threshold; and the second threshold is configured by the second network element.

Optionally, transmitting the network assistance data according to the first information includes: transmitting the network assistance data, if the first information indicates that at least one high-precision positioning subscribed terminal is located within a first TA list, or the first information indicates that the number of high-precision positioning subscribed terminals located within the first TA list is greater than or equal to the second threshold corresponding to the first TA list, or the first information indicates to transmit the network assistance data; wherein the one or more TA lists include the first TA list.

Optionally, stopping transmitting, by the first network element, the network assistance data according to the first information includes: stopping transmitting the network assistance data, if the first information indicates that no high-precision positioning subscribed terminal is located within a first TA list, or the first information indicates that the number of high-precision positioning subscribed terminals located within the first TA list is less than the second threshold corresponding to the first TA list, or the first information indicates to stop transmitting the network assistance data; wherein the one or more TA lists include the first TA list.

Optionally, the first information further includes: position information of a high-precision positioning subscribed terminal.

Optionally, transmitting the network assistance data according to the first information includes: generating position information of second network assistance data according to the position information of the high-precision positioning subscribed terminal; and transmitting the network assistance data according to the position information of the second network assistance data.

Optionally, the first information indicates to transmit the network assistance data; or the first information indicates to stop transmitting the network assistance data.

Optionally, the method further includes: transmitting a subscription message to the second network element, wherein the subscription message is used for subscribing whether to transmit the network assistance data.

Optionally, the first network element includes a location management function (LMF), and the second network element includes an access and mobility management function (AMF).

In a second aspect, embodiments of the disclosure provide a method for data processing, applied to a second network element and including: transmitting first information to a first network element, wherein the first information indicates the first network element to determine to transmit or stop transmitting network assistance data according to the first information, or the first information indicates the first network element to transmit or stop transmitting the network assistance data to a radio network or a base station by invoking a service of the second network element.

Optionally, transmitting the first information to the first network element includes: receiving a subscription message from the first network element, wherein the subscription message includes at least one of a high-precision positioning identifier or position information of first network assistance data; and transmitting the first information to the first network element according to the subscription message.

Optionally, if the subscription message does not include a first threshold, the first information includes a first indication, wherein the first indication indicates a number of high-precision positioning subscribed terminals located within a range determined according to the position information of the first network assistance data; and the first threshold is configured by the first network element; or
if the subscription message includes the first threshold, the first information includes a second indication, wherein the second indication indicates whether the number of high-precision positioning subscribed terminals located within the range determined according to the position information of the first network assistance data is greater than or equal to the first threshold; and the first threshold is configured by the first network element; or
the first information includes a third indication, wherein the third indication indicates to transmit or stop transmitting the network assistance data, and the third indication is determined by the second network element based on whether the number of high-precision positioning subscribed terminals located within the range determined according to the position information of the first network assistance data is greater than or equal to the first threshold; and the first threshold is configured by the second network element.

Optionally, transmitting the first information to the first network element includes: receiving a subscription message that is transmitted by the first network element for each of one or more tracking area (TA) lists, wherein the subscription message includes a high-precision positioning identifier, and TA list information; and transmitting the first information to the first network element according to the subscription message.

Optionally, if the subscription message does not include a second threshold, the first information includes a fourth indication, wherein the fourth indication indicates a number of high-precision positioning subscribed terminals located within a range determined according to the TA list information; and the second threshold is configured by the first network element; or
if the subscription message includes the second threshold, the first information includes a fifth indication, wherein the fifth indication indicates whether the number of high-precision positioning subscribed terminals located within the range determined according to the TA list information is greater than or equal to the second threshold; and the second threshold is configured by the first network element; or
the first information includes a sixth indication, wherein the sixth indication indicates to transmit or stop transmitting the network assistance data, and the sixth indication is determined by the second network element based on whether the number of high-precision positioning subscribed terminals located within the range determined according to the TA list information is greater than or equal to the second threshold; and the second threshold is configured by the second network element.

Optionally, the first information further includes: position information of a high-precision positioning subscribed terminal.

Optionally, transmitting the first information to the first network element includes: transmitting the first information to the first network element, if it is determined that at least one high-precision positioning subscribed terminal is located within a range determined according to position information of third network assistance data, or that a number of high-precision positioning subscribed terminals located within the range determined according to the position information of the third network assistance data is greater than or equal to a third threshold;
wherein the first information indicates that at least one high-precision positioning subscribed terminal is located within the range determined according to the position information of the third network assistance data, or the first information indicates that the number of high-precision positioning subscribed terminals located within the range determined according to the position information of the third network assistance data is greater than or equal to the third threshold, or the first information indicates the number of high-precision positioning subscribed terminals located within the range determined according to the position information of the third network assistance data, or the first information indicates to transmit the network assistance data.

Optionally, transmitting the first information to the first network element includes: transmitting the first information to the first network element, if it is determined that no high-precision positioning subscribed terminal is located in a transmission area of third network assistance data, or that a number of high-precision positioning subscribed terminals located in the transmission area of the third network assistance data is less than a third threshold; wherein the first information indicates that no high-precision positioning subscribed terminal is located within a range determined according to position information of the third network assistance data, or the first information indicates that a number of high-precision positioning subscribed terminals located within the range determined according to the position information of the third network assistance data is less than the third threshold, or the first information indicates the number of high-precision positioning subscribed terminals located within the range determined according to the position information of the third network assistance data, or the first information indicates to stop transmitting the network assistance data.

Optionally, the method further includes: receiving a subscription message from the first network element, wherein the subscription message is used for subscribing whether to transmit the network assistance data.

Optionally, the first network element includes a location management function (LMF), and the second network element includes an access and mobility management function (AMF).

In a third aspect, embodiments of the disclosure provide an apparatus for data processing, applied to a first network element and including: a first receiving module, configured to receive first information from a second network element; and a first processing module, configured to transmit or stop transmitting network assistance data according to the first information, or transmit or stop transmitting the network assistance data to a radio network or a base station by invoking a service of the second network element.

Optionally, the first receiving module is further configured to: transmit a subscription message to the second network element, wherein the subscription message includes at least one of a high-precision positioning identifier or position information of first network assistance data; and receive the first information from the second network element.

Optionally, if the subscription message does not include a first threshold, the first information includes a first indication, wherein the first indication indicates a number of high-precision positioning subscribed terminals located within a range determined according to the position information of the first network assistance data; and the first threshold is configured by the first network element; or
if the subscription message includes the first threshold, the first information includes a second indication, wherein the second indication indicates whether the number of high-precision positioning subscribed terminals located within the range determined according to the position information of the first network assistance data is greater than or equal to the first threshold; and the first threshold is configured by the first network element; or
the first information includes a third indication, wherein the third indication indicates to transmit or stop transmitting the network assistance data, and the third indication is determined by the second network element based on whether the number of high-precision positioning subscribed terminals located within the range determined according to the position information of the first network assistance data is greater than or equal to the first threshold; and the first threshold is configured by the second network element.

Optionally, the first processing module is further configured to: transmit the network assistance data, if the first information indicates that at least one high-precision positioning subscribed terminal is located within the range determined according to the position information of the first network assistance data, or the first information indicates that the number of high-precision positioning subscribed terminals located within the range determined according to the position information of the first network assistance data is greater than or equal to the first threshold, or the first information indicates to transmit the network assistance data.

Optionally, the first processing module is further configured to: stop transmitting the network assistance data, if the first information indicates that no high-precision positioning subscribed terminal is located within the range determined according to the position information of the first network assistance data, or the first information indicates that the number of high-precision positioning subscribed terminals located within the range determined according to the position information of the first network assistance data is less than the first threshold, or the first information indicates to stop transmitting the network assistance data.

Optionally, the first receiving module is further configured to: map, according to acquired position information of the first network assistance data, the position information of the first network assistance data into one or more tracking area (TA) lists; transmit a subscription message for each of one or more TA lists, wherein the subscription message includes a high-precision positioning identifier, and TA list information; and receive the first information from the second network element.

Optionally, if the subscription message does not include a second threshold, the first information includes a fourth indication, wherein the fourth indication indicates a number of high-precision positioning subscribed terminals located within a range determined according to the TA list information; and the second threshold is configured by the first network element; or
if the subscription message includes the second threshold, the first information includes a fifth indication, wherein the fifth indication indicates whether the number of high-precision positioning subscribed terminals located within the range determined according to the TA list information is greater than or equal to the second threshold; and the second threshold is configured by the first network element; or
the first information includes a sixth indication, wherein the sixth indication indicates to transmit or stop transmitting the network assistance data, and the sixth indication is determined by the second network element based on whether the number of high-precision positioning subscribed terminals located within the range determined according to the TA list information is greater than or equal to the second threshold; and the second threshold is configured by the second network element.

Optionally, the first processing module is further configured to: transmit the network assistance data, if the first information indicates that at least one high-precision positioning subscribed terminal is located within a first TA list, or the first information indicates that the number of high-precision positioning subscribed terminals located within the first TA list is greater than or equal to the second threshold corresponding to the first TA list, or the first information indicates to transmit the network assistance data; wherein the one or more TA lists include the first TA list.

Optionally, the first processing module is further configured to: stop transmitting the network assistance data, if the first information indicates that no high-precision positioning subscribed terminal is located within a first TA list, or the first information indicates that the number of high-precision positioning subscribed terminals located within the first TA list is less than the second threshold corresponding to the first TA list, or the first information indicates to stop transmitting the network assistance data; wherein the one or more TA lists include the first TA list.

Optionally, the first information further includes: position information of a high-precision positioning subscribed terminal.

Optionally, the first processing module further includes: a first generation sub-module, configured to generate position information of second network assistance data according to the position information of the high-precision positioning subscribed terminal; and a first transmission sub-module, configured to transmit the network assistance data according to the position information of the second network assistance data.

Optionally, the first information indicates to transmit the network assistance data; or the first information indicates to stop transmitting the network assistance data.

Optionally, the apparatus further includes: a first transmission module, configured to transmit a subscription message to the second network element, wherein the subscription message is used for subscribing whether to transmit the network assistance data.

Optionally, the first network element includes a location management function (LMF), and the second network element includes an access and mobility management function (AMF).

In a fourth aspect, embodiments of the disclosure provide an apparatus for data processing, applied to a second network element and including: a first transmission module, configured to transmit first information to a first network element, wherein the first information indicates the first network element to determine to transmit or stop transmitting network assistance data according to the first information, or the first information indicates the first network element to transmit or stop transmitting the network assistance data to a radio network or a base station by invoking a service of the second network element.

Optionally, the first transmission module is further configured to: receive a subscription message from the first network element, wherein the subscription message includes at least one of a high-precision positioning identifier or position information of first network assistance data; and transmit the first information to the first network element according to the subscription message.

Optionally, if the subscription message does not include a first threshold, the first information includes a first indication, wherein the first indication indicates a number of high-precision positioning subscribed terminals located within a range determined according to the position information of the first network assistance data; and the first threshold is configured by the first network element; or
if the subscription message includes the first threshold, the first information includes a second indication, wherein the second indication indicates whether the number of high-precision positioning subscribed terminals located within the range determined according to the position information of the first network assistance data is greater than or equal to the first threshold; and the first threshold is configured by the first network element; or
the first information includes a third indication, wherein the third indication indicates to transmit or stop transmitting the network assistance data, and the third indication is determined by the second network element based on whether the number of high-precision positioning subscribed terminals located within the range determined according to the position information of the first network assistance data is greater than or equal to the first threshold; and the first threshold is configured by the second network element.

Optionally, the first transmission module is further configured to: receive a subscription message that is transmitted by the first network element for each of one or more tracking area (TA) lists, wherein the subscription message includes a high-precision positioning identifier, and TA list information; and transmit the first information to the first network element according to the subscription message.

Optionally, if the subscription message does not include a second threshold, the first information includes a fourth indication, wherein the fourth indication indicates a number of high-precision positioning subscribed terminals located within a range determined according to the TA list information; and the second threshold is configured by the first network element; or
if the subscription message includes the second threshold, the first information includes a fifth indication, wherein the fifth indication indicates whether the number of high-precision positioning subscribed terminals located within the range determined according to the TA list information is greater than or equal to the second threshold; and the second threshold is configured by the first network element; or
the first information includes a sixth indication, wherein the sixth indication indicates to transmit or stop transmitting the network assistance data, and the sixth indication is determined by the second network element based on whether the number of high-precision positioning subscribed terminals located within the range determined according to the TA list information is greater than or equal to the second threshold; and the second threshold is configured by the second network element.

Optionally, the first information further includes: position information of a high-precision positioning subscribed terminal.

Optionally, the first transmission module is further configured to: transmit the first information to the first network element, if it is determined that at least one high-precision positioning subscribed terminal is located within a range determined according to position information of third network assistance data, or that a number of high-precision positioning subscribed terminals located within the range determined according to the position information of the third network assistance data is greater than or equal to a third threshold;
wherein the first information indicates that at least one high-precision positioning subscribed terminal is located within the range determined according to the position information of the third network assistance data, or the first information indicates that the number of high-precision positioning subscribed terminals located within the range determined according to the position information of the third network assistance data is greater than or equal to the third threshold, or the first information indicates the number of high-precision positioning subscribed terminals located within the range determined according to the position information of the third network assistance data, or the first information indicates to transmit the network assistance data.

Optionally, the first transmission module is further configured to: transmit the first information to the first network element, if it is determined that no high-precision positioning subscribed terminal is located in a transmission area of third network assistance data, or that a number of high-precision positioning subscribed terminals located in the transmission area of the third network assistance data is less than a third threshold;
wherein the first information indicates that no high-precision positioning subscribed terminal is located within a range determined according to position information of the third network assistance data, or the first information indicates that a number of high-precision positioning subscribed terminals located within the range determined according to the position information of the third network assistance data is less than the third threshold, or the first information indicates the number of high-precision positioning subscribed terminals located within the range determined according to the position information of the third network assistance data, or the first information indicates to stop transmitting the network assistance data.

Optionally, the apparatus may further include: a first receiving module, configured to receive a subscription message from the first network element, wherein the subscription message is used for subscribing whether to transmit the network assistance data.

Optionally, the first network element includes a location management function (LMF), and the second network element includes an access and mobility management function (AMF).

In a fifth aspect, embodiments of the disclosure provide an apparatus for data processing, applied to a first network element, and including a processor and a transceiver; wherein the transceiver is configured to receive first information from a second network element; and the processor is configured to transmit or stop transmitting network assistance data according to the first information, or transmit or stop transmitting the network assistance data to a radio network or a base station by invoking a service of the second network element.

Optionally, the transceiver is further configured to: transmit a subscription message to the second network element, wherein the subscription message includes at least one of a high-precision positioning identifier or position information of first network assistance data; and receive the first information from the second network element.

Optionally, if the subscription message does not include a first threshold, the first information includes a first indication, wherein the first indication indicates a number of high-precision positioning subscribed terminals located within a range determined according to the position information of the first network assistance data; and the first threshold is configured by the first network element; or
if the subscription message includes the first threshold, the first information includes a second indication, wherein the second indication indicates whether the number of high-precision positioning subscribed terminals located within the range determined according to the position information of the first network assistance data is greater than or equal to the first threshold; and the first threshold is configured by the first network element; or
the first information includes a third indication, wherein the third indication indicates to transmit or stop transmitting the network assistance data, and the third indication is determined by the second network element based on whether the number of high-precision positioning subscribed terminals located within the range determined according to the position information of the first network assistance data is greater than or equal to the first threshold; and the first threshold is configured by the second network element.

Optionally, the processor is further configured to: transmit the network assistance data, if the first information indicates that at least one high-precision positioning subscribed terminal is located within the range determined according to the position information of the first network assistance data, or the first information indicates that the number of high-precision positioning subscribed terminals located within the range determined according to the position information of the first network assistance data is greater than or equal to the first threshold, or the first information indicates to transmit the network assistance data.

Optionally, the processor is further configured to: stop transmitting the network assistance data, if the first information indicates that no high-precision positioning subscribed terminal is located within the range determined according to the position information of the first network assistance data, or the first information indicates that the number of high-precision positioning subscribed terminals located within the range determined according to the position information of the first network assistance data is less than the first threshold, or the first information indicates to stop transmitting the network assistance data.

Optionally, the transceiver is further configured to: map, according to acquired position information of the first network assistance data, the position information of the first network assistance data into one or more tracking area (TA) lists; transmit a subscription message for each of one or more TA lists, wherein the subscription message includes a high-precision positioning identifier, and TA list information; and receive the first information from the second network element.

Optionally, if the subscription message does not include a second threshold, the first information includes a fourth indication, wherein the fourth indication indicates a number of high-precision positioning subscribed terminals located within a range determined according to the TA list information; and the second threshold is configured by the first network element; or
if the subscription message includes the second threshold, the first information includes a fifth indication, wherein the fifth indication indicates whether the number of high-precision positioning subscribed terminals located within the range determined according to the TA list information is greater than or equal to the second threshold; and the second threshold is configured by the first network element; or
the first information includes a sixth indication, wherein the sixth indication indicates to transmit or stop transmitting the network assistance data, and the sixth indication is determined by the second network element based on whether the number of high-precision positioning subscribed terminals located within the range determined according to the TA list information is greater than or equal to the second threshold; and the second threshold is configured by the second network element.

Optionally, the processor is further configured to: transmit the network assistance data, if the first information indicates that at least one high-precision positioning subscribed terminal is located within a first TA list, or the first information indicates that the number of high-precision positioning subscribed terminals located within the first TA list is greater than or equal to the second threshold corresponding to the first TA list, or the first information indicates to transmit the network assistance data; wherein the one or more TA lists include the first TA list.

Optionally, the processor is further configured to: stop transmitting the network assistance data, if the first information indicates that no high-precision positioning subscribed terminal is located within a first TA list, or the first information indicates that the number of high-precision positioning subscribed terminals located within the first TA list is less than the second threshold corresponding to the first TA list, or the first information indicates to stop transmitting the network assistance data; wherein the one or more TA lists include the first TA list.

Optionally, the first information further includes: position information of a high-precision positioning subscribed terminal.

Optionally, the processor is further configured to: generate position information of second network assistance data according to the position information of the high-precision positioning subscribed terminal; and transmit the network assistance data according to the position information of the second network assistance data.

Optionally, the first information indicates to transmit the network assistance data; or the first information indicates to stop transmitting the network assistance data.

Optionally, the transceiver is further configured to: transmit a subscription message to the second network element, wherein the subscription message is used for subscribing whether to transmit the network assistance data.

Optionally, the first network element includes a location management function (LMF), and the second network element includes an access and mobility management function (AMF).

In a sixth aspect, embodiments of the disclosure provide an apparatus for data processing, applied to a second network element, and including a processor and a transceiver; wherein the transceiver is configured to transmit first information to a first network element, wherein the first information indicates the first network element to determine to transmit or stop transmitting network assistance data according to the first information, or the first information indicates the first network element to transmit or stop transmitting the network assistance data to a radio network or a base station by invoking a service of the second network element.

Optionally, the transceiver is further configured to: receive a subscription message from the first network element, wherein the subscription message includes at least one of a high-precision positioning identifier or position information of first network assistance data; and transmit the first information to the first network element according to the subscription message.

Optionally, if the subscription message does not include a first threshold, the first information includes a first indication, wherein the first indication indicates a number of high-precision positioning subscribed terminals located within a range determined according to the position information of the first network assistance data; and the first threshold is configured by the first network element; or
if the subscription message includes the first threshold, the first information includes a second indication, wherein the second indication indicates whether the number of high-precision positioning subscribed terminals located within the range determined according to the position information of the first network assistance data is greater than or equal to the first threshold; and the first threshold is configured by the first network element; or
the first information includes a third indication, wherein the third indication indicates to transmit or stop transmitting the network assistance data, and the third indication is determined by the second network element based on whether the number of high-precision positioning subscribed terminals located within the range determined according to the position information of the first network assistance data is greater than or equal to the first threshold; and the first threshold is configured by the second network element.

Optionally, the transceiver is further configured to: receive a subscription message that is transmitted by the first network element for each of one or more tracking area (TA) lists, wherein the subscription message includes a high-precision positioning identifier, and TA list information; and transmit the first information to the first network element according to the subscription message.

Optionally, if the subscription message does not include a second threshold, the first information includes a fourth indication, wherein the fourth indication indicates a number of high-precision positioning subscribed terminals located within a range determined according to the TA list information; and the second threshold is configured by the first network element; or
if the subscription message includes the second threshold, the first information includes a fifth indication, wherein the fifth indication indicates whether the number of high-precision positioning subscribed terminals located within the range determined according to the TA list information is greater than or equal to the second threshold; and the second threshold is configured by the first network element; or
the first information includes a sixth indication, wherein the sixth indication indicates to transmit or stop transmitting the network assistance data, and the sixth indication is determined by the second network element based on whether the number of high-precision positioning subscribed terminals located within the range determined according to the TA list information is greater than or equal to the second threshold; and the second threshold is configured by the second network element.

Optionally, the first information further includes: position information of a high-precision positioning subscribed terminal.

Optionally, the transceiver is further configured to: transmit the first information to the first network element, if it is determined that at least one high-precision positioning subscribed terminal is located within a range determined according to position information of third network assistance data, or that a number of high-precision positioning subscribed terminals located within the range determined according to the position information of the third network assistance data is greater than or equal to a third threshold;

wherein the first information indicates that at least one high-precision positioning subscribed terminal is located within the range determined according to the position information of the third network assistance data, or the first information indicates that the number of high-precision positioning subscribed terminals located within the range determined according to the position information of the third network assistance data is greater than or equal to the third threshold, or the first information indicates the number of high-precision positioning subscribed terminals located within the range determined according to the position information of the third network assistance data, or the first information indicates to transmit the network assistance data.

Optionally, the transceiver is further configured to: transmit the first information to the first network element, if it is determined that no high-precision positioning subscribed terminal is located in a transmission area of third network assistance data, or that a number of high-precision positioning subscribed terminals located in the transmission area of the third network assistance data is less than a third threshold;
wherein the first information indicates that no high-precision positioning subscribed terminal is located within a range determined according to position information of the third network assistance data, or the first information indicates that a number of high-precision positioning subscribed terminals located within the range determined according to the position information of the third network assistance data is less than the third threshold, or the first information indicates the number of high-precision positioning subscribed terminals located within the range determined according to the position information of the third network assistance data, or the first information indicates to stop transmitting the network assistance data.

Optionally, the transceiver is further configured to: receive a subscription message from the first network element, wherein the subscription message is used for subscribing whether to transmit the network assistance data.

Optionally, the first network element includes a location management function (LMF), and the second network element includes an access and mobility management function (AMF).

In a seventh aspect, embodiments of the disclosure further provide a communication device, including a memory, a processor, and a program that is stored in the memory and is capable of being run on the processor, wherein the processor executes the program to implement the steps of the above method for data processing.

In an eighth aspect, embodiments of the disclosure further provide a readable storage medium stored with a program, wherein the program, when executed by a processor, implements the steps of the above method for data processing.

In embodiments of the disclosure, a first network element transmits or stops transmitting network assistance data according to first information, or transmits or stops transmitting the network assistance data to a radio network or a base station by invoking a service of a second network element, so that transmission of the network assistance data can be performed or stopped in a targeted manner, and the consumption of air interface resources and network performance can be reduced.

### BRIEF DESCRIPTION OF THE DRAWINGS

FIG. 1 illustrates a first flowchart of a method for data processing according to embodiments of the disclosure.
FIG. 2 illustrates a second flowchart of a method for data information according to embodiments of the disclosure.
FIG. 3 illustrates a schematic diagram of a procedure of issuing network assistance data according to embodiments of the disclosure.
FIG. 4 illustrates a schematic flowchart of stopping broadcasting network assistance data according to embodiments of the disclosure.
FIG. 5 illustrates a schematic flowchart of controlling and indicating, based on an Access and Mobility Management Function (AMF), a location management function (LMF) to broadcast network assistance data according to embodiments of the disclosure.
FIG. 6 illustrates a first structural diagram of an apparatus for data processing according to embodiments of the disclosure.
FIG. 7 illustrates a second structural diagram of an apparatus for data information according to embodiments of the disclosure.
FIG. 8 illustrates a third structural diagram of an apparatus for data processing according to embodiments of the disclosure.
FIG. 9 illustrates a fourth structural diagram of an apparatus for data processing according to embodiments of the disclosure.

### DETAILED DESCRIPTION

In the embodiments of the disclosure, the term "and/or" herein describes a relation between associated objects; representing that three relations may exist. For example, A and/or B may represent following three cases: existence of A alone, existence of both A and B, and existence of B alone. The character "/" generally indicates that the contextual objects are in an "or" relationship.

The term "plurality" in the embodiments of the disclosure refers to two or more, and other quantifiers are similar.

Technical solutions of the embodiments of the disclosure will be described below clearly and completely in conjunction with the drawings of the embodiments of the disclosure. Apparently, the described embodiments are merely some rather than all embodiments of the disclosure. All other embodiments obtained by those skilled in the art based on the embodiments of the disclosure without paying any inventive effort shall fall within the scope of protection of the disclosure.

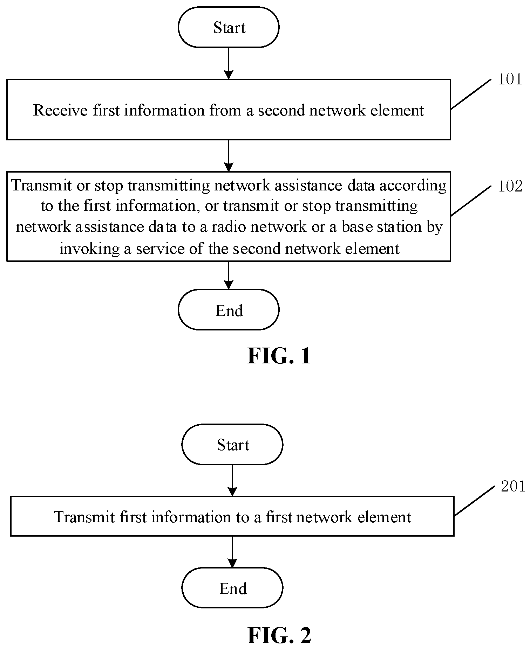

Referring to FIG. 1, FIG. 1 illustrates a flowchart of a method for data processing according to embodiments of the disclosure. The method is applied to a first network element. The first network element includes, but is not limited to, an LMF. As illustrated in FIG. 1, following operations 101 and 102 are included.

At operation 101, first information is received from a second network element.

In embodiments of the disclosure, the first information may indicate to transmit or stop transmitting network assistance data, or the first information may include information for determining to transmit or stop transmitting network assistance data, such as a number of high-precision positioning subscribed terminals in a certain area, whether the number of high-precision positioning subscribed terminals in the certain area exceeds a threshold, and the like.

The network assistance data may also be referred to as assistance data, real time kinematic (RTK) calibration data, or the like. The second network element includes, but is not limited to, an AMF.

In this operation, the first network element may acquire the first information in a variety of manners.

Manner 1: the first network element may transmit a subscription message to the second network element and receive the first information from the second network element. The subscription message includes a high-precision positioning identifier and/or position information of first network assistance data. The high-precision positioning identifier indicates that transmission of network assistance data needs to be performed or stopped for a high-precision positioning subscribed terminal. The position information of the first network assistance data may be acquired from an RTK data calibration center. The position information may be a broadcast area, an area of interest (AOI), a presence reporting area (PRA), or the like.

In such a case, the first network element may also determine a first threshold (an integer greater than or equal to 1) and may or may not transmit the first threshold to the second network element. Alternatively, the second network element may determine the first threshold by itself.

Correspondingly, if the subscription message does not include a first threshold, the first information includes a first indication. The first indication indicates a number of high-precision positioning subscribed terminals located within a range determined according to the position information of the first network assistance data. The first threshold is configured by the first network element.

Alternatively, if the subscription message includes the first threshold, the first information includes a second indication. The second indication indicates whether the number of high-precision positioning subscribed terminals located within the range determined according to the position information of the first network assistance data is greater than or equal to the first threshold. The first threshold is configured by the first network element.

Alternatively, the first information includes a third indication. The third indication indicates to transmit or stop transmitting the network assistance data. The third indication is determined by the second network element based on whether the number of high-precision positioning subscribed terminals located within the range determined according to the position information of the first network assistance data is greater than or equal to the first threshold. The first threshold is configured by the second network element.

Manner 2: the first network element maps, according to acquired position information of the first network assistance data, the position information of the first network assistance data into one or more tracking area (TA) lists, and transmits a subscription message for each of the one or more TA lists. The subscription message includes a high-precision positioning identifier, and TA list information. The first network element receives the first information from the second network element.

The position information of the first network assistance data may be acquired from an RTK data calibration center. The position information may be a broadcast area, an area of interest (AOI), a presence reporting area (PRA), or the like.

In embodiments of the disclosure, considering that idle user equipment (UE) moves within a TA list but cannot be perceived by the second network element (such as the AMF), the first network element may perform mapping at a TA list granularity. Here, how the first network element performs the mapping is not limited. For example, the first network element may map the position information of the first network assistance data into one or more TA lists according to a correspondence relationship, or may randomly map the position information of the first network assistance data into one or more TA lists.

In such a case, the first network element may also determine a second threshold (an integer greater than or equal to 1) and may or may not transmit the second threshold to the second network element. Alternatively, the second network element may determine the second threshold by itself.

If the subscription message does not include a second threshold, the first information includes a fourth indication. The fourth indication indicates a number of high-precision positioning subscribed terminals located within a range determined according to the TA list information. The second threshold is configured by the first network element.

Alternatively, if the subscription message includes the second threshold, the first information includes a fifth indication. The fifth indication indicates whether the number of high-precision positioning subscribed terminals located within the range determined according to the TA list information is greater than or equal to the second threshold. The second threshold is configured by the first network element.

Alternatively, the first information includes a sixth indication. The sixth indication indicates to transmit or stop transmitting the network assistance data. The sixth indication is determined by the second network element based on whether the number of high-precision positioning subscribed terminals located within the range determined according to the TA list information is greater than or equal to the second threshold. The second threshold is configured by the second network element.

In the above process, the range determined according to the TA list information may be a range corresponding to a TA list of one or more TA lists determined according to information of the TA list. For example, assuming that there are two TA lists, the second network element may determine information such as the number of high-precision positioning subscribed terminals within the range corresponding to each of the two TA lists.

Optionally, in the above two manners, the first information further includes: position information of a high-precision positioning subscribed terminal. Then, the first network element may generate position information of second network assistance data according to the position information of the high-precision positioning subscribed terminal, and transmit the network assistance data according to the position information of the second network assistance data.

The position information of the second network assistance data may be determined according to the position information of the high-precision positioning subscribed terminal.

Manner 3: the first information indicates to transmit the network assistance data; or the first information indicates to stop transmitting the network assistance data. That is, in this manner, the second network element directly indicates the first network element to transmit or stop transmitting the network assistance data.

Optionally, in this case, the first network element may further transmit a subscription message to the second network element. The subscription message is used for subscribing whether to transmit the network assistance data.

At operation 102, whether to transmit or stop transmitting network assistance data is determined according to the first information, or transmission of the network assistance data to a radio network or a base station is performed or stopped by invoking a service of the second network element.

The service may be, for example, Namf_Communication_NonUeN2MessageTransfer.

In embodiments of the disclosure, the first network element may determine (or judge, decide, infer or the like) to perform or stop transmission of the network assistance data according to the first information, or the first network element may directly perform or stop transmission of the network assistance data according to the first information.

Corresponding to the above manner 1, the network assistance data is transmitted, if the first information indicates that at least one high-precision positioning subscribed terminal is located within the range determined according to the position information of the first network assistance data, or the first information indicates that the number of high-precision positioning subscribed terminals located within the range determined according to the position information of the first network assistance data is greater than or equal to the first threshold, or the first information indicates to transmit the network assistance data.

Transmission of the network assistance data is stopped, if the first information indicates that no high-precision positioning subscribed terminal is located within the range determined according to the position information of the first network assistance data, or the first information indicates that the number of high-precision positioning subscribed terminals located within the range determined according to the position information of the first network assistance data is less than the first threshold, or the first information indicates to stop transmitting the network assistance data.

In this operation, corresponding to the above manner 2, the network assistance data is transmitted, if the first information indicates that at least one high-precision positioning subscribed terminal is located within a first TA list, or the first information indicates that the number of high-precision positioning subscribed terminals located within the first TA list is greater than or equal to the second threshold corresponding to the first TA list, or the first information indicates to transmit the network assistance data. The one or more TA lists include the first TA list.

Transmission of the network assistance data is stopped, if the first information indicates that no high-precision positioning subscribed terminal is located within a first TA list, or the first information indicates that the number of high-precision positioning subscribed terminals located within the first TA list is less than the second threshold corresponding to the first TA list, or the first information indicates to stop transmitting the network assistance data.

Corresponding to the above manner 3, the network assistance data is transmitted if the first information indicates to transmit the network assistance data; or, transmission of the network assistance data is stopped if the first information indicates to stop transmitting the network assistance data.

In embodiments of the disclosure, a first network element transmits or stops transmitting network assistance data according to first information, or transmits or stops transmitting the network assistance data to a radio network or a base station by invoking a service of a second network element, so that transmission of the network assistance data can be performed or stopped in a targeted manner, and the consumption of air interface resources and network performance can be reduced.

Referring to FIG. 2, FIG. 2 illustrates a flowchart of a method for data processing according to embodiments of the disclosure. The method is applied to a second network element. As illustrated in FIG. 2, the method includes following operation 201.

At operation 201, first information is transmitted to a first network element.

The first information indicates the first network element to determine (or judge, decide, infer or the like), according to the first information, to transmit or stop transmitting network assistance data, or the first information indicates the first network element to transmit or stop transmitting the network assistance data to a radio network or a base station by invoking a service of the second network element. Alternatively, the first network element may directly transmit or stop transmitting the network assistance data according to the first information.

Optionally, in this operation, the second network element may transmit the first information in the following manners.

Manner 1: The second network element may receive a subscription message from the first network element and transmit the first information to the first network element according to the subscription message. The subscription message includes a high-precision positioning identifier and/or position information of first network assistance data.

In such a case, the first network element may also determine a first threshold (an integer greater than or equal to 1) and may or may not transmit the first threshold to the second network element. Alternatively, the second network element may determine the first threshold by itself.

Then, if the subscription message does not include a first threshold, the first information includes a first indication. The first indication indicates a number of high-precision positioning subscribed terminals located within a range determined according to the position information of the first network assistance data. The first threshold is configured by the first network element.

Alternatively, if the subscription message includes the first threshold, the first information includes a second indication. The second indication indicates whether the number of high-precision positioning subscribed terminals located within the range determined according to the position information of the first network assistance data is greater than or equal to the first threshold. The first threshold is configured by the first network element.

Alternatively, the first information includes a third indication. The third indication indicates to transmit or stop transmitting the network assistance data. The third indication is determined by the second network element based on whether the number of high-precision positioning subscribed terminals located within the range determined according to the position information of the first network assistance data is greater than or equal to the first threshold. The first threshold is configured by the second network element.

Manner 2: The second network element may receive a subscription message that is transmitted by the first network element for each of one or more tracking area (TA) lists, and transmit the first information to the first network element according to the subscription message. The subscription message includes a high-precision positioning identifier, and TA list information.

In such a case, the first network element may also determine a second threshold (an integer greater than or equal to 1) and may or may not transmit the second threshold to the second network element. Alternatively, the second network element may determine the second threshold by itself.

Then, if the subscription message does not include a second threshold, the first information includes a fourth indication. The fourth indication indicates a number of high-precision positioning subscribed terminals located within a range determined according to the TA list information. The second threshold is configured by the first network element.

Alternatively, if the subscription message includes the second threshold, the first information includes a fifth indication. The fifth indication indicates whether the number of high-precision positioning subscribed terminals located within the range determined according to the TA list information is greater than or equal to the second threshold. The second threshold is configured by the first network element.

Alternatively, the first information includes a sixth indication. The sixth indication indicates to transmit or stop transmitting the network assistance data. The sixth indication is determined by the second network element based on whether the number of high-precision positioning subscribed terminals located within the range determined according to the TA list information is greater than or equal to the second threshold. The second threshold is configured by the second network element.

Manner 3: the second network element actively indicates whether the first network element is to transmit the network assistance data.

The first information is transmitted to the first network element, if it is determined that at least one high-precision positioning subscribed terminal is located within a range determined according to position information of third network assistance data, or that a number of high-precision positioning subscribed terminals located within the range determined according to the position information of the third network assistance data is greater than or equal to a third threshold. The first information indicates that at least one high-precision positioning subscribed terminal is located within the range determined according to the position information of the third network assistance data, or the first information indicates that the number of high-precision positioning subscribed terminals located within the range determined according to the position information of the third network assistance data is greater than or equal to the third threshold, or the first information indicates the number of high-precision positioning subscribed terminals located within the range determined according to the position information of the third network assistance data, or the first information indicates to transmit the network assistance data.

The first information is transmitted to the first network element, if it is determined that no high-precision positioning subscribed terminal is located in a transmission area of third network assistance data, or that a number of high-precision positioning subscribed terminals located in the transmission area of the third network assistance data is less than a third threshold.

The first information indicates that no high-precision positioning subscribed terminal is located within a range determined according to position information of the third network assistance data, or the first information indicates that a number of high-precision positioning subscribed terminals located within the range determined according to the position information of the third network assistance data is less than the third threshold, or the first information indicates the number of high-precision positioning subscribed terminals located within the range determined according to the position information of the third network assistance data, or the first information indicates to stop transmitting the network assistance data.

The third threshold is an integer greater than or equal to 1.

In this case, the second network element may further receive a subscription message from the first network element. The subscription message is used for subscribing whether to transmit the network assistance data. Thereafter, the second network element may determine whether to transmit network assistance data to the first network element based on the subscription message.

In embodiments of the disclosure, a first network element transmits or stops transmitting network assistance data according to first information, or transmits or stops transmitting the network assistance data to a radio network or a base station by invoking a service of a second network element, so that transmission of the network assistance data can be performed or stopped in a targeted manner, and the consumption of air interface resources and network performance can be reduced.

In the following embodiment, description is made with the first network element being an LMF and the second network element being an AMF as an example.

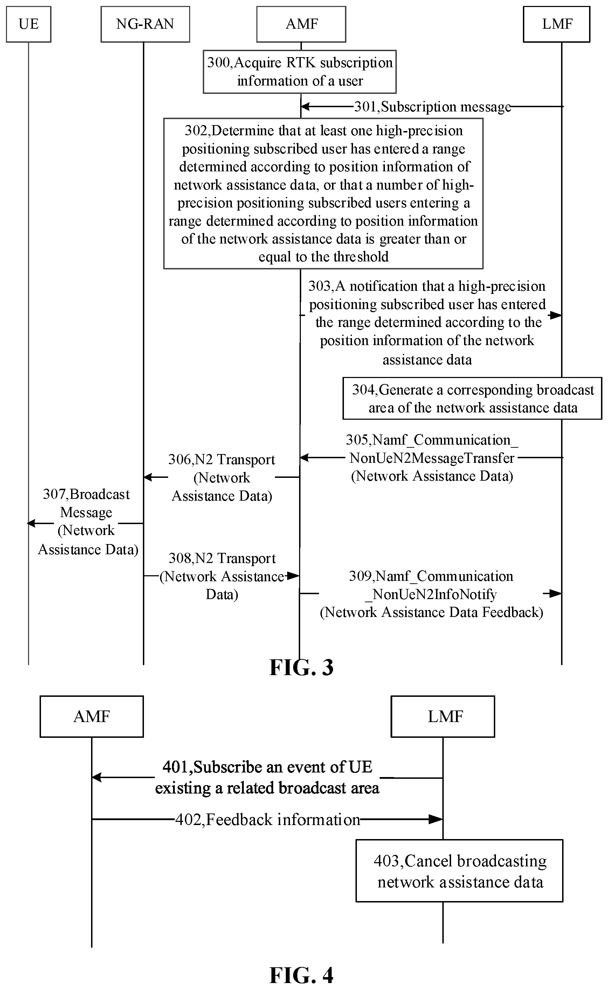

In an embodiment of the disclosure, as illustrated in FIG. 3, the procedure of distributing network assistance data may include following operations:

At operation 300, the AMF acquires real-time kinematic (RTK) subscription information of a user through an initial registration process of User Equipment (UE), and determines whether the user is a high-precision positioning subscribed terminal (or a high-precision positioning user).

For example, if the user subscribes the RTK, it means that the user is a high-precision positioning subscribed terminal.

At operation 301, after the LMF acquires the network assistance data from an RTK data calibration center, the LMF transmits to the AMF a subscription message carrying a high-precision positioning identifier, position information of the network assistance data (such as a broadcast area), and a threshold for a number of high-precision positioning subscribed users (i.e., the first threshold, which parameter is optional), to subscribe an event of UE entering the broadcast area. The broadcast area may have a granularity of such as a Tracking Area (TA), a TA list, a next-Generation Node B (gNB), a cell, or the like.

Alternatively, the LMF maps the position information of the first network assistance data into one or more tracking area (TA) lists, based on the position information of the network assistance data fed back by the RTK data calibration center (or a base station data center). For example, the LMF maps a broadcast area of the network assistance data into one or more TA lists based on information of the broadcast area of the network assistance data fed back by the RTK data calibration center (or the base station data center). When transmitting a subscription message to the AMF, a subscription message is distributed for each TA list, carrying a high-precision positioning identifier and TA list information.

At operation 302, in the process of handover, initial registration, periodic registration, registration update, and the like of the UE, the AMF determines, according to the current position information of the UE, whether at least one high-precision positioning subscribed user has entered the range determined according to the position information of the network assistance data (for example, the broadcast area of the network assistance data), or whether the number of high-precision positioning subscribed users entering the range determined according to the position information of the network assistance data (for example, the broadcast area of the network assistance data) has reached the above threshold.

At operation 303: if the AMF determines that at least one high-precision positioning subscribed user has entered the range determined according to the position information of the network assistance data, or the AMF determines that the number of high-precision positioning subscribed users entering the range determined according to the position information of the network assistance data is greater than or equal to the above threshold, the AMF transmits a notification to the LMF. The notification notifies that a high-precision positioning subscribed user has entered the range determined according to the position information of the network assistance data, and may carry UE-related position information.

If the LMF distributes a subscription message based on a TA list, the AMF may return UE position information corresponding to the TA list.

At operation 304: based on the position information returned by the AMF, the LMF generates a corresponding broadcast area of the network assistance data. At operation 305, the LMF distributes the network assistance data, carrying information of the broadcast area of the network assistance data.

At operations 305 to 309, the LMF distributes the network assistance data to the UE through the AMF and a radio access network (RAN), and a response is returned.

For example, the LMF transmits Namf_Communication_NonUeN2MessageTransfer (network assistance data) to the AMF. The AMF transmits N2 Transport (network assistance data) to a next-generation RAN (NG-RAN). The NG-RAN transmits a broadcast message (network assistance data) to the UE. The NG-RAN transmits N2 Transport (network assistance data feedback) to the AMF. The AMF transmits Namf_Communication_NonUeN2InfoNotify (network assistance data feedback) and the like to the LMF.

In an embodiment of the disclosure, as illustrated in FIG. 4, the procedure of stopping transmitting network assistance data may include following operations:

At operation 401, the LMF subscribes to the AMF for an event that UE exits a relevant broadcast area.

At operation 402, the AMF determines that a number of high-precision positioning subscribed users located in the broadcast area is less than a certain threshold, or that no UE is in the broadcast area, and makes feedback to the LMF.

At operation 403: if the AMF feeds back that no UE is in the broadcast area, or indicates that "it is determined that the number of high-precision positioning subscribed users entering the broadcast area is less than a certain threshold", the LMF cancels broadcasting the network assistance data.

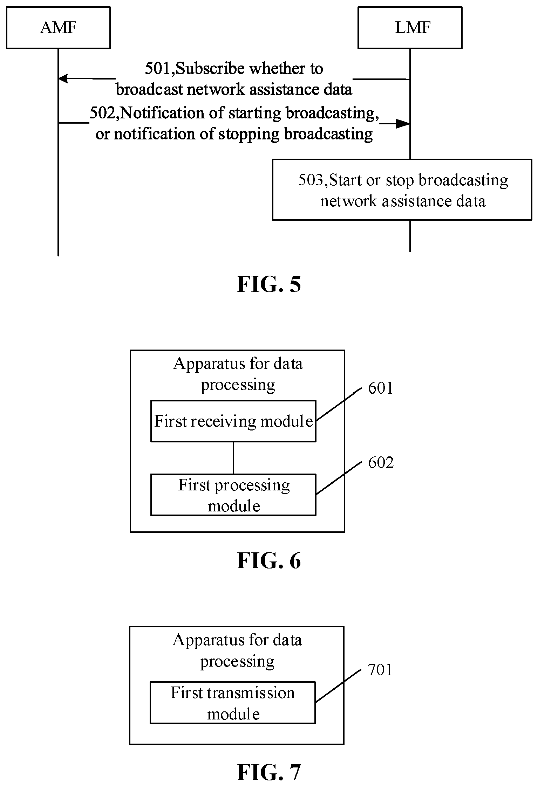

In an embodiment of the disclosure, as illustrated in FIG. 5, the procedure of controlling and indicating, based on an Access and Mobility Management Function (AMF), a location management function (LMF) to broadcast network assistance data may include following operations:

At operation 501, the LMF subscribes to the AMF for whether to broadcast network assistance data, carrying a high-precision positioning identifier, a broadcast area of the network assistance data, and a threshold for a number of high-precision positioning subscribed users (optional).

At operation 502: after determining that at least one high-precision positioning subscribed user enters the broadcast area of the network assistance data, or determining that the number of high-precision positioning subscribed users entering the broadcast area of the network assistance data reaches the above threshold, the AMF transmits a notification to the LMF to start broadcasting.

Alternatively, after determining that no UE enters the broadcast area of the network assistance data, or that the number of UE entering the broadcast area of the network assistance data is less than the above threshold, the AMF transmits a notification to the LMF to stop broadcasting.

At operation 503: according to the indication of the AMF, the LMF starts or stops broadcasting of the network assistance data.

As can be seen from the above description, with the scheme of the embodiments of the disclosure, broadcast of network assistance data can be started or stopped on demand for the position of a subscribed user.

Referring to FIG. 6, FIG. 6 illustrates a structural diagram of an apparatus for data processing according to embodiments of the disclosure. The apparatus is applied to a first network element. As illustrated in FIG. 6, the apparatus for data processing includes a first receiving module 601 and a first processing module 602.

The first receiving module 601 is configured to receive first information from a second network element. The first processing module 602 is configured to transmit or stop transmitting network assistance data according to the first information, or transmit or stop transmitting the network assistance data to a radio network or a base station by invoking a service of the second network element.

Optionally, the first receiving module is further configured to: transmit a subscription message to the second network element. The subscription message includes at least one of a high-precision positioning identifier or position information of first network assistance data. The first receiving module is further configured to: receive the first information from the second network element.

Optionally, if the subscription message does not include a first threshold, the first information includes a first indication. The first indication indicates a number of high-precision positioning subscribed terminals located within a range determined according to the position information of the first network assistance data. The first threshold is configured by the first network element.

Alternatively, if the subscription message includes the first threshold, the first information includes a second indication. The second indication indicates whether the number of high-precision positioning subscribed terminals located within the range determined according to the position information of the first network assistance data is greater than or equal to the first threshold. The first threshold is configured by the first network element.

Alternatively, the first information includes a third indication. The third indication indicates to transmit or stop transmitting the network assistance data. The third indication is determined by the second network element based on whether the number of high-precision positioning subscribed terminals located within the range determined according to the position information of the first network assistance data is greater than or equal to the first threshold. The first threshold is configured by the second network element.

Optionally, the first processing module is further configured to: transmit the network assistance data, if the first information indicates that at least one high-precision positioning subscribed terminal is located within the range determined according to the position information of the first network assistance data, or the first information indicates that the number of high-precision positioning subscribed terminals located within the range determined according to the position information of the first network assistance data is greater than or equal to the first threshold, or the first information indicates to transmit the network assistance data.

Optionally, the first processing module is further configured to: stop transmitting the network assistance data, if the first information indicates that no high-precision positioning subscribed terminal is located within the range determined according to the position information of the first network assistance data, or the first information indicates that the number of high-precision positioning subscribed terminals located within the range determined according to the position information of the first network assistance data is less than the first threshold, or the first information indicates to stop transmitting the network assistance data.

Optionally, the first receiving module is further configured to: map, according to acquired position information of the first network assistance data, the position information of the first network assistance data into one or more tracking area (TA) lists. The first receiving module is further configured to: transmit a subscription message for each of one or more TA lists. The subscription message includes a high-precision positioning identifier, and TA list information. The first receiving module is further configured to: receive the first information from the second network element.

Optionally, if the subscription message does not include a second threshold, the first information includes a fourth indication. The fourth indication indicates a number of high-precision positioning subscribed terminals located within a range determined according to the TA list information. The second threshold is configured by the first network element.

Alternatively, if the subscription message includes the second threshold, the first information includes a fifth indication. The fifth indication indicates whether the number of high-precision positioning subscribed terminals located within the range determined according to the TA list information is greater than or equal to the second threshold. The second threshold is configured by the first network element.

Alternatively, the first information includes a sixth indication. The sixth indication indicates to transmit or stop transmitting the network assistance data. The sixth indication is determined by the second network element based on whether the number of high-precision positioning subscribed terminals located within the range determined according to the TA list information is greater than or equal to the second threshold. The second threshold is configured by the second network element.

Optionally, the first processing module is further configured to: transmit the network assistance data, if the first information indicates that at least one high-precision positioning subscribed terminal is located within a first TA list, or the first information indicates that the number of high-precision positioning subscribed terminals located within the first TA list is greater than or equal to the second threshold corresponding to the first TA list, or the first information indicates to transmit the network assistance data.

The one or more TA lists include the first TA list.

Optionally, the first processing module is further configured to: stop transmitting the network assistance data, if the first information indicates that no high-precision positioning subscribed terminal is located within a first TA list, or the first information indicates that the number of high-precision positioning subscribed terminals located within the first TA list is less than the second threshold corresponding to the first TA list, or the first information indicates to stop transmitting the network assistance data.

The one or more TA lists include the first TA list.

Optionally, the first information further includes: position information of a high-precision positioning subscribed terminal.

Optionally, the first processing module further includes a first generation sub-module and a first transmission sub-module.

The first generation sub-module is configured to generate position information of second network assistance data according to the position information of the high-precision positioning subscribed terminal.

The first transmission sub-module is configured to transmit the network assistance data according to the position information of the second network assistance data.

Optionally, the first information indicates to transmit the network assistance data; or the first information indicates to stop transmitting the network assistance data.

Optionally, the apparatus further includes a first transmission module.

The first transmission module is configured to transmit a subscription message to the second network element. The subscription message is used for subscribing whether to transmit the network assistance data.

Optionally, the first network element includes a location management function (LMF), and the second network element includes an access and mobility management function (AMF).

The apparatus according to embodiments of the disclosure can execute the above method embodiment, and is realized in a principle similar to the method embodiment and has a technical effect similar to the method embodiment, which will not be described in this embodiment again here.

Referring to FIG. 7, FIG. 7 illustrates a structural diagram of an apparatus for data processing according to embodiments of the disclosure. The apparatus is applied to a second network element. As illustrated in FIG. 7, the apparatus for data processing includes a first transmission module 701.

The first transmission module 701 is configured to transmit first information to a first network element. The first information indicates the first network element to determine to transmit or stop transmitting network assistance data according to the first information, or the first information indicates the first network element to transmit or stop transmitting the network assistance data to a radio network or a base station by invoking a service of the second network element.

Optionally, the first transmission module is further configured to: receive a subscription message from the first network element. The subscription message includes at least one of a high-precision positioning identifier or position information of first network assistance data. The first transmission module is further configured to: transmit the first information to the first network element according to the subscription message.

Optionally, if the subscription message does not include a first threshold, the first information includes a first indication. The first indication indicates a number of high-precision positioning subscribed terminals located within a range determined according to the position information of the first network assistance data. The first threshold is configured by the first network element.

Alternatively, if the subscription message includes the first threshold, the first information includes a second indication. The second indication indicates whether the number of high-precision positioning subscribed terminals located within the range determined according to the position information of the first network assistance data is greater than or equal to the first threshold. The first threshold is configured by the first network element.

Alternatively, the first information includes a third indication. The third indication indicates to transmit or stop transmitting the network assistance data. The third indication is determined by the second network element based on whether the number of high-precision positioning subscribed terminals located within the range determined according to the position information of the first network assistance data is greater than or equal to the first threshold. The first threshold is configured by the second network element.

Optionally, the first transmission module is further configured to: receive a subscription message that is transmitted by the first network element for each of one or more tracking area (TA) lists. The subscription message includes a high-precision positioning identifier, and TA list information. The first transmission module is further configured to: transmit the first information to the first network element according to the subscription message.

Optionally, if the subscription message does not include a second threshold, the first information includes a fourth indication. The fourth indication indicates a number of high-precision positioning subscribed terminals located within a range determined according to the TA list information. The second threshold is configured by the first network element.

Alternatively, if the subscription message includes the second threshold, the first information includes a fifth indication. The fifth indication indicates whether the number of high-precision positioning subscribed terminals located within the range determined according to the TA list information is greater than or equal to the second threshold. The second threshold is configured by the first network element.

Alternatively, the first information includes a sixth indication. The sixth indication indicates to transmit or stop transmitting the network assistance data. The sixth indication is determined by the second network element based on whether the number of high-precision positioning subscribed terminals located within the range determined according to the TA list information is greater than or equal to the second threshold. The second threshold is configured by the second network element.

Optionally, the first information further includes: position information of a high-precision positioning subscribed terminal.

Optionally, the first transmission module is further configured to: transmit the first information to the first network element, if it is determined that at least one high-precision positioning subscribed terminal is located within a range determined according to position information of third network assistance data, or that a number of high-precision positioning subscribed terminals located within the range determined according to the position information of the third network assistance data is greater than or equal to a third threshold.

The first information indicates that at least one high-precision positioning subscribed terminal is located within the range determined according to the position information of the third network assistance data, or the first information indicates that the number of high-precision positioning subscribed terminals located within the range determined according to the position information of the third network assistance data is greater than or equal to the third threshold, or the first information indicates the number of high-precision positioning subscribed terminals located within the range determined according to the position information of the third network assistance data, or the first information indicates to transmit the network assistance data.

Optionally, the first transmission module is further configured to: transmit the first information to the first network element, if it is determined that no high-precision positioning subscribed terminal is located in a transmission area of third network assistance data, or that a number of high-precision positioning subscribed terminals located in the transmission area of the third network assistance data is less than a third threshold.

The first information indicates that no high-precision positioning subscribed terminal is located within a range determined according to position information of the third network assistance data, or the first information indicates that a number of high-precision positioning subscribed terminals located within the range determined according to the position information of the third network assistance data is less than the third threshold, or the first information indicates the number of high-precision positioning subscribed terminals located within the range determined according to the position information of the third network assistance data, or the first information indicates to stop transmitting the network assistance data.

Optionally, the apparatus may further include a first receiving module.

The first receiving module is configured to receive a subscription message from the first network element. The subscription message is used for subscribing whether to transmit the network assistance data.

Optionally, the first network element includes a location management function (LMF), and the second network element includes an access and mobility management function (AMF).

The apparatus according to embodiments of the disclosure can execute the above method embodiment, and is realized in a principle similar to the method embodiment and has a technical effect similar to the method embodiment, which will not be described in this embodiment again here.

It should be noted that the division of units in the embodiments of the disclosure is illustrative and is only logical function division, and other forms of division may be used in actual implementation. Additionally, various functional units in the embodiments of the disclosure may be integrated in one processing unit, or may exist separately physically; or two or more units may be integrated in one unit. The above integrated units may be implemented in form of hardware, or may be implemented in form of software functions.

If implemented in form of software functional units and sold or used as independent product, the integrated units may be stored in a processor-readable storage medium. Based on such understanding, the technical solution of the disclosure substantially or in part making contributions to the related art or all or a part of the technical solution may be embodied in a software product. The computer software product is stored in a storage medium, and includes several instructions to enable a computer device (which may be a personal computer, a server, a network device or the like) or a processor to perform all or some steps of the method according to various embodiments of the disclosure. The foregoing storage medium includes various media capable of storage program codes such as a USB flash drive, a mobile hard disk drive, a read-only memory (ROM), a random access memory (RAM), a magnetic disc, or a compact disc (CD).

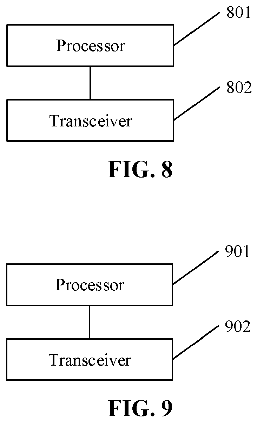

Referring to FIG. 8, FIG. 8 illustrates a structural diagram of an apparatus for data processing according to embodiments of the disclosure. The apparatus is applied to a first network element. As illustrated in FIG. 8, the apparatus for data processing includes a processor 801 and a transceiver 802.

The transceiver 802 is configured to receive first information from a second network element.

The processor is configured to transmit or stop transmitting network assistance data according to the first information, or transmit or stop transmitting the network assistance data to a radio network or a base station by invoking a service of the second network element.

Optionally, the transceiver 802 is further configured to: transmit a subscription message to the second network element. The subscription message includes at least one of a high-precision positioning identifier or position information of first network assistance data. The transceiver 802 is further configured to: receive the first information from the second network element.

Optionally, if the subscription message does not include a first threshold, the first information includes a first indication. The first indication indicates a number of high-precision positioning subscribed terminals located within a range determined according to the position information of the first network assistance data. The first threshold is configured by the first network element.

Alternatively, if the subscription message includes the first threshold, the first information includes a second indication. The second indication indicates whether the number of high-precision positioning subscribed terminals located within the range determined according to the position information of the first network assistance data is greater than or equal to the first threshold. The first threshold is configured by the first network element.

Alternatively, the first information includes a third indication. The third indication indicates to transmit or stop transmitting the network assistance data. The third indication is determined by the second network element based on whether the number of high-precision positioning subscribed terminals located within the range determined according to the position information of the first network assistance data is greater than or equal to the first threshold. The first threshold is configured by the second network element.

Optionally, the processor 801 is further configured to: transmit the network assistance data, if the first information indicates that at least one high-precision positioning subscribed terminal is located within the range determined according to the position information of the first network assistance data, or the first information indicates that the number of high-precision positioning subscribed terminals located within the range determined according to the position information of the first network assistance data is greater than or equal to the first threshold, or the first information indicates to transmit the network assistance data.

Optionally, the processor 801 is further configured to: stop transmitting the network assistance data, if the first information indicates that no high-precision positioning subscribed terminal is located within the range determined according to the position information of the first network assistance data, or the first information indicates that the number of high-precision positioning subscribed terminals located within the range determined according to the position information of the first network assistance data is less than the first threshold, or the first information indicates to stop transmitting the network assistance data.

Optionally, the transceiver 802 is further configured to: map, according to acquired position information of the first network assistance data, the position information of the first network assistance data into one or more tracking area (TA) lists. The transceiver 802 is further configured to: transmit a subscription message for each of one or more TA lists. The subscription message includes a high-precision positioning identifier, and TA list information. The transceiver 802 is further configured to: receive the first information from the second network element.

Optionally, if the subscription message does not include a second threshold, the first information includes a fourth indication. The fourth indication indicates a number of high-precision positioning subscribed terminals located within a range determined according to the TA list information. The second threshold is configured by the first network element.

Alternatively, if the subscription message includes the second threshold, the first information includes a fifth indication. The fifth indication indicates whether the number of high-precision positioning subscribed terminals located within the range determined according to the TA list information is greater than or equal to the second threshold. The second threshold is configured by the first network element.

Alternatively, the first information includes a sixth indication. The sixth indication indicates to transmit or stop transmitting the network assistance data. The sixth indication is determined by the second network element based on whether the number of high-precision positioning subscribed terminals located within the range determined according to the TA list information is greater than or equal to the second threshold. The second threshold is configured by the second network element.

Optionally, the processor 801 is further configured to: transmit the network assistance data, if the first information indicates that at least one high-precision positioning subscribed terminal is located within a first TA list, or the first information indicates that the number of high-precision positioning subscribed terminals located within the first TA list is greater than or equal to the second threshold corresponding to the first TA list, or the first information indicates to transmit the network assistance data.

The one or more TA lists include the first TA list.

Optionally, the processor 801 is further configured to: stop transmitting the network assistance data, if the first information indicates that no high-precision positioning subscribed terminal is located within a first TA list, or the first information indicates that the number of high-precision positioning subscribed terminals located within the first TA list is less than the second threshold corresponding to the first TA list, or the first information indicates to stop transmitting the network assistance data.

The one or more TA lists include the first TA list.

Optionally, the first information further includes: position information of a high-precision positioning subscribed terminal.

Optionally, the processor 801 is further configured to: generate position information of second network assistance data according to the position information of the high-precision positioning subscribed terminal; and transmit the network assistance data according to the position information of the second network assistance data.

Optionally, the first information indicates to transmit the network assistance data; or the first information indicates to stop transmitting the network assistance data.

Optionally, the transceiver 802 is further configured to: transmit a subscription message to the second network element. The subscription message is used for subscribing whether to transmit the network assistance data.

Optionally, the first network element includes a location management function (LMF), and the second network element includes an access and mobility management function (AMF).

The apparatus according to embodiments of the disclosure can execute the above method embodiment, and is realized in a principle similar to the method embodiment and has a technical effect similar to the method embodiment, which will not be described in this embodiment again here.

Referring to FIG. 9, FIG. 9 illustrates a structural diagram of an apparatus for data processing according to embodiments of the disclosure. The apparatus is applied to a second network element. As illustrated in FIG. 9, the apparatus for data processing includes a processor 901 and a transceiver 902.

The transceiver 902 is configured to transmit first information to a first network element. The first information indicates the first network element to determine to transmit or stop transmitting network assistance data according to the first information, or the first information indicates the first network element to transmit or stop transmitting the network assistance data to a radio network or a base station by invoking a service of the second network element.

Optionally, the transceiver 902 is further configured to: receive a subscription message from the first network element. The subscription message includes at least one of a high-precision positioning identifier or position information of first network assistance data. The transceiver 902 is further configured to: transmit the first information to the first network element according to the subscription message.

Optionally, if the subscription message does not include a first threshold, the first information includes a first indication. The first indication indicates a number of high-precision positioning subscribed terminals located within a range determined according to the position information of the first network assistance data. The first threshold is configured by the first network element.

Alternatively, if the subscription message includes the first threshold, the first information includes a second indication. The second indication indicates whether the number of high-precision positioning subscribed terminals located within the range determined according to the position information of the first network assistance data is greater than or equal to the first threshold. The first threshold is configured by the first network element.

Alternatively, the first information includes a third indication. The third indication indicates to transmit or stop transmitting the network assistance data. The third indication is determined by the second network element based on whether the number of high-precision positioning subscribed terminals located within the range determined according to the position information of the first network assistance data is greater than or equal to the first threshold. The first threshold is configured by the second network element.

Optionally, the transceiver 902 is further configured to: receive a subscription message that is transmitted by the first network element for each of one or more tracking area (TA) lists. The subscription message includes a high-precision positioning identifier, and TA list information. The transceiver 902 is further configured to: transmit the first information to the first network element according to the subscription message.

Optionally, if the subscription message does not include a second threshold, the first information includes a fourth indication. The fourth indication indicates a number of high-precision positioning subscribed terminals located within a range determined according to the TA list information. The second threshold is configured by the first network element.

Alternatively, if the subscription message includes the second threshold, the first information includes a fifth indication. The fifth indication indicates whether the number of high-precision positioning subscribed terminals located within the range determined according to the TA list information is greater than or equal to the second threshold. The second threshold is configured by the first network element.

Alternatively, the first information includes a sixth indication. The sixth indication indicates to transmit or stop transmitting the network assistance data. The sixth indication is determined by the second network element based on whether the number of high-precision positioning subscribed terminals located within the range determined according to the TA list information is greater than or equal to the second threshold. The second threshold is configured by the second network element.

Optionally, the first information further includes: position information of a high-precision positioning subscribed terminal.

Optionally, the transceiver 902 is further configured to: transmit the first information to the first network element, if it is determined that at least one high-precision positioning subscribed terminal is located within a range determined according to position information of third network assistance data, or that a number of high-precision positioning subscribed terminals located within the range determined according to the position information of the third network assistance data is greater than or equal to a third threshold.

The first information indicates that at least one high-precision positioning subscribed terminal is located within the range determined according to the position information of the third network assistance data, or the first information indicates that the number of high-precision positioning subscribed terminals located within the range determined according to the position information of the third network assistance data is greater than or equal to the third threshold, or the first information indicates the number of high-precision positioning subscribed terminals located within the range determined according to the position information of the third network assistance data, or the first information indicates to transmit the network assistance data.

Optionally, the transceiver 902 is further configured to: transmit the first information to the first network element, if it is determined that no high-precision positioning subscribed terminal is located in a transmission area of third network assistance data, or that a number of high-precision positioning subscribed terminals located in the transmission area of the third network assistance data is less than a third threshold.

The first information indicates that no high-precision positioning subscribed terminal is located within a range determined according to position information of the third network assistance data, or the first information indicates that a number of high-precision positioning subscribed terminals located within the range determined according to the position information of the third network assistance data is less than the third threshold, or the first information indicates the number of high-precision positioning subscribed terminals located within the range determined according to the position information of the third network assistance data, or the first information indicates to stop transmitting the network assistance data.

Optionally, the transceiver 902 is further configured to: receive a subscription message from the first network element. The subscription message is used for subscribing whether to transmit the network assistance data.

Optionally, the first network element includes a location management function (LMF), and the second network element includes an access and mobility management function (AMF).

The apparatus according to embodiments of the disclosure can execute the above method embodiment, and is realized in a principle similar to the method embodiment and has a technical effect similar to the method embodiment, which will not be described in this embodiment again here.

Embodiments of the disclosure provide a communication device, including a memory, a processor, and a program that is stored in the memory and is capable of being run on the processor. The processor is configured to read the program in the memory to implement the steps of the above method for data processing.

Embodiments of the disclosure further provide a readable storage medium stored with a program. The program, when executed by a processor, implements processes in the embodiment of the above method for data processing, and can achieve the same technical effect as the method embodiment, which will not be described here gain. The readable storage medium may be any available medium or data storage device accessible by a processor, including but not limited to a magnetic memory(for example, a floppy disk, a hard disk, a magnetic tape, or a Magneto-Optical (MO) disc), an optical memory (for example, a Compact disc (CD), a Digital Video disc (DVD), a Blue-ray disc (BD), or a High-Definition Versatile disc (HVD)), and a semiconductor Memory (for example, a ROM, an Erasable Programmable Read-Only Memory (EPROM), an Electrically Erasable Programmable ROM (EEPROM), a non-volatile memory (such as a NAND flash), a Solid State Disk/Drive (SSD)), and the like.

It should be noted that, herein, the terms "comprise," "include," or any other variation thereof are intended to encompass a non-exclusive inclusion such that a process, method, article, or apparatus that includes a series of elements includes not only those elements, but also other elements that are not explicitly listed, or elements inherent to such a process, method, article, or apparatus. Without further limitation, an element limited by the expression "comprising a" does not preclude the presence of additional identical elements in a process, method, article, or apparatus that includes the element.

From the above description of implementations, those skilled in the art can clearly understand that the methods of the above embodiments can be implemented by software and a necessary universal hardware platform, and of course, can also be implemented by hardware; however, the former is a preferred implementation in many cases. Based on such understanding, the technical solution of the disclosure substantially or in part making contributions to the related art may be embodied in a software product. The computer software product is stored in a storage medium (such a read only memory (ROM)/random access memory (RAM), a magnetic disc, an optical disc), and includes several instructions to enable a terminal (which may be a mobile phone, a computer, a server, an air conditioner, a network device or the like) to perform the method according to various embodiments of the disclosure.

The embodiments of the disclosure have been described above with reference to the accompanying drawings, but the disclosure is not limited to the above detailed description which is merely illustration rather than limiting. Under the inspiration of the disclosure, those skilled in the art can make many forms without departing from the spirit of the disclosure and the scope of protection of the claims, all of which shall fall within the protection of the disclosure.

## Claims

1. A method for data processing, applied to a first network element and comprising:
receiving first information from a second network element; and
transmitting or stopping transmitting network assistance data according to the first information, or transmitting or stopping transmitting network assistance data to a radio network or a base station by invoking a service of the second network element.

2. The method of claim 1, wherein receiving the first information from the second network element comprises:
transmitting a subscription message to the second network element, wherein the subscription message comprises at least one of a high-precision positioning identifier or position information of first network assistance data; and
receiving the first information from the second network element.

3. The method of claim 2, wherein
if the subscription message does not comprise a first threshold, the first information comprises a first indication, wherein the first indication indicates a number of high-precision positioning subscribed terminals located within a range determined according to the position information of the first network assistance data; and the first threshold is configured by the first network element; or
if the subscription message comprises a first threshold, the first information comprises a second indication, wherein the second indication indicates whether a number of high-precision positioning subscribed terminals located within a range determined according to the position information of the first network assistance data is greater than or equal to the first threshold; and the first threshold is configured by the first network element; or
the first information includes a third indication, wherein the third indication indicates to transmit or stop transmitting the network assistance data, and the third indication is determined by the second network element based on whether a number of high-precision positioning subscribed terminals located within a range determined according to the position information of the first network assistance data is greater than or equal to a first threshold; and the first threshold is configured by the second network element.

4. The method of claim 3, wherein transmitting, by the first network element, the network assistance data according to the first information comprises:
transmitting the network assistance data, if the first information indicates that at least one high-precision positioning subscribed terminal is located within the range determined according to the position information of the first network assistance data, or the first information indicates that the number of high-precision positioning subscribed terminals located within the range determined according to the position information of the first network assistance data is greater than or equal to the first threshold, or the first information indicates to transmit the network assistance data.

5. The method of claim 3, wherein stopping transmitting, by the first network element, the network assistance data according to the first information comprises:
stopping transmitting the network assistance data, if the first information indicates that no high-precision positioning subscribed terminal is located within the range determined according to the position information of the first network assistance data, or the first information indicates that the number of high-precision positioning subscribed terminals located within the range determined according to the position information of the first network assistance data is less than the first threshold, or the first information indicates to stop transmitting the network assistance data.

6. The method of claim 1, wherein receiving the first information from the second network element comprises:
mapping, according to acquired position information of first network assistance data, the position information of the first network assistance data into one or more tracking area (TA) lists;
transmitting a subscription message for each of one or more TA lists, wherein the subscription message comprises a high-precision positioning identifier and TA list information; and
receiving the first information from the second network element.

7. The method of claim 6, wherein
if the subscription message does not comprise a second threshold, the first information comprises a fourth indication, wherein the fourth indication indicates a number of high-precision positioning subscribed terminals located within a range determined according to the TA list information; and the second threshold is configured by the first network element; or
if the subscription message comprises a second threshold, the first information comprises a fifth indication, wherein the fifth indication indicates whether a number of high-precision positioning subscribed terminals located within a range determined according to the TA list information is greater than or equal to the second threshold; and the second threshold is configured by the first network element; or
the first information includes a sixth indication, wherein the sixth indication indicates to transmit or stop transmitting the network assistance data, and the sixth indication is determined by the second network element based on whether a number of high-precision positioning subscribed terminals located within a range determined according to the TA list information is greater than or equal to a second threshold; and the second threshold is configured by the second network element.

8. The method of claim 7, wherein transmitting the network assistance data according to the first information comprises:
transmitting the network assistance data, if the first information indicates that at least one high-precision positioning subscribed terminal is located within a first TA list, or the first information indicates that a number of high-precision positioning subscribed terminals located within the first TA list is greater than or equal to the second threshold corresponding to the first TA list, or the first information indicates to transmit the network assistance data;
wherein the one or more TA lists comprise the first TA list.

9. The method of claim 7, wherein stopping transmitting, by the first network element, the network assistance data according to the first information comprises:
stopping transmitting the network assistance data, if the first information indicates that no high-precision positioning subscribed terminal is located within a first TA list, or the first information indicates that a number of high-precision positioning subscribed terminals located within the first TA list is less than the second threshold corresponding to the first TA list, or the first information indicates to stop transmitting the network assistance data;
wherein the one or more TA lists comprise the first TA list.

10. The method of any one of claims 2 to 9, wherein the first information further comprises:
position information of a high-precision positioning subscribed terminal.

11. The method of claim 10, wherein transmitting the network assistance data according to the first information comprises:
generating position information of second network assistance data according to the position information of the high-precision positioning subscribed terminal; and
transmitting the network assistance data according to the position information of the second network assistance data.

12. The method of claim 1, wherein
the first information indicates to transmit the network assistance data; or
the first information indicates to stop transmitting the network assistance data.

13. The method of claim 12, further comprising:
transmitting a subscription message to the second network element, wherein the subscription message is used for subscribing whether to transmit the network assistance data.

14. The method of any one of claims 1 to 9 and 12, wherein the first network element comprises a location management function (LMF), and the second network element comprises an access and mobility management function (AMF).

15. A method for data processing, applied to a second network element and comprising:
transmitting first information to a first network element, wherein the first information indicates the first network element to determine to transmit or stop transmitting network assistance data according to the first information, or the first information indicates the first network element to transmit or stop transmitting network assistance data to a radio network or a base station by invoking a service of the second network element.

16. The method of claim 15, wherein transmitting the first information to the first network element comprises:
receiving a subscription message from the first network element, wherein the subscription message comprises at least one of a high-precision positioning identifier or position information of first network assistance data; and
transmitting the first information to the first network element according to the subscription message.

17. The method of claim 16, wherein
if the subscription message does not comprise a first threshold, the first information comprises a first indication, wherein the first indication indicates a number of high-precision positioning subscribed terminals located within a range determined according to the position information of the first network assistance data; and the first threshold is configured by the first network element; or
if the subscription message comprises a first threshold, the first information comprises a second indication, wherein the second indication indicates whether a number of high-precision positioning subscribed terminals located within a range determined according to the position information of the first network assistance data is greater than or equal to the first threshold; and the first threshold is configured by the first network element; or
the first information includes a third indication, wherein the third indication indicates to transmit or stop transmitting the network assistance data, and the third indication is determined by the second network element based on whether a number of high-precision positioning subscribed terminals located within a range determined according to the position information of the first network assistance data is greater than or equal to a first threshold; and the first threshold is configured by the second network element.

18. The method of claim 15, wherein transmitting the first information to the first network element comprises:
receiving a subscription message that is transmitted by the first network element for each of one or more tracking area (TA) lists, wherein the subscription message comprises a high-precision positioning identifier and TA list information; and
transmitting the first information to the first network element according to the subscription message.

19. The method of claim 18, wherein
if the subscription message does not comprise a second threshold, the first information comprises a fourth indication, wherein the fourth indication indicates a number of high-precision positioning subscribed terminals located within a range determined according to the TA list information; and the second threshold is configured by the first network element; or
if the subscription message comprises a second threshold, the first information comprises a fifth indication, wherein the fifth indication indicates whether a number of high-precision positioning subscribed terminals located within a range determined according to the TA list information is greater than or equal to the second threshold; and the second threshold is configured by the first network element; or
the first information includes a sixth indication, wherein the sixth indication indicates to transmit or stop transmitting the network assistance data, and the sixth indication is determined by the second network element based on whether a number of high-precision positioning subscribed terminals located within a range determined according to the TA list information is greater than or equal to a second threshold; and the second threshold is configured by the second network element.

20. The method of claim 16 or 18, wherein the first information further comprises:
position information of a high-precision positioning subscribed terminal.

21. The method of claim 15, wherein transmitting the first information to the first network element comprises:
transmitting the first information to the first network element, if it is determined that at least one high-precision positioning subscribed terminal is located within a range determined according to position information of third network assistance data, or that a number of high-precision positioning subscribed terminals located within a range determined according to the position information of the third network assistance data is greater than or equal to a third threshold;
wherein the first information indicates that at least one high-precision positioning subscribed terminal is located within the range determined according to the position information of the third network assistance data, or the first information indicates that the number of high-precision positioning subscribed terminals located within the range determined according to the position information of the third network assistance data is greater than or equal to the third threshold, or the first information indicates the number of high-precision positioning subscribed terminals located within the range determined according to the position information of the third network assistance data, or the first information indicates to transmit the network assistance data.

22. The method of claim 15, wherein transmitting the first information to the first network element comprises:
transmitting the first information to the first network element, if it is determined that no high-precision positioning subscribed terminal is located in a transmission area of third network assistance data, or that a number of high-precision positioning subscribed terminals located in a transmission area of the third network assistance data is less than a third threshold;
wherein the first information indicates that no high-precision positioning subscribed terminal is located within a range determined according to position information of the third network assistance data, or the first information indicates that a number of high-precision positioning subscribed terminals located within the range determined according to the position information of the third network assistance data is less than the third threshold, or the first information indicates the number of high-precision positioning subscribed terminals located within the range determined according to the position information of the third network assistance data, or the first information indicates to stop transmitting the network assistance data.

23. The method of claim 21 or 22, further comprising:
receiving a subscription message from the first network element, wherein the subscription message is used for subscribing whether to transmit the network assistance data.

24. The method of any one of claims 16 to 21 and 22, wherein the first network element comprises a location management function (LMF), and the second network element comprises an access and mobility management function (AMF).

25. An apparatus for data processing, applied to a first network element and comprising:
a first receiving module, configured to receive first information from a second network element;
and
a first processing module, configured to transmit or stop transmitting network assistance data according to the first information, or transmit or stop transmitting network assistance data to a radio network or a base station by invoking a service of the second network element.

26. An apparatus for data processing, applied to a second network element and comprising:
a first transmission module, configured to transmit first information to a first network element, wherein the first information indicates the first network element to determine to transmit or stop transmitting network assistance data according to the first information, or the first information indicates the first network element to transmit or stop transmitting network assistance data to a radio network or a base station by invoking a service of the second network element.

27. An apparatus for data processing, applied to a first network element, and comprising a processor and a transceiver;
wherein the transceiver is configured to receive first information from a second network element; and
the processor is configured to transmit or stop transmitting network assistance data according to the first information, or transmit or stop transmitting network assistance data to a radio network or a base station by invoking a service of the second network element.

28. An apparatus for data processing, applied to a second network element, and comprising a processor and a transceiver;
the transceiver is configured to transmit first information to a first network element, wherein the first information indicates the first network element to determine to transmit or stop transmitting network assistance data according to the first information, or the first information indicates the first network element to transmit or stop transmitting network assistance data to a radio network or a base station by invoking a service of the second network element.

29. A communication device, comprising a memory, a processor, and a program that is stored in the memory and is capable of being run on the processor, wherein the processor is configured to read the program in the memory to implement the steps of the method for data processing of any one of claims 1 to 24.

30. A readable storage medium stored with a program that, when executed by a processor, implements the steps of the method for data processing of any one of claims 1 to 24.
